(19) Europäisches Patentamt
European Patent Office
Office européen des brevets

(11) EP 0 867 273 A2

## (12) EUROPÄISCHE PATENTANMELDUNG

(43) Veröffentlichungstag:
30.09.1998 Patentblatt 1998/40

(51) Int. Cl.⁶: **B30B 11/20**

(21) Anmeldenummer: 98104809.3

(22) Anmeldetag: 17.03.1998

(84) Benannte Vertragsstaaten:
AT BE CH DE DK ES FI FR GB GR IE IT LI LU MC NL PT SE
Benannte Erstreckungsstaaten:
AL LT LV MK RO SI

(30) Priorität: 24.03.1997 DE 29705312 U

(71) Anmelder:
Holz-, Metall-, Abfall-, Recyclingtechnik GmbH
79576 Weil am Rhein (DE)

(72) Erfinder: **Päper, Bernd**
4114 Hofstetten/SO (CH)

(74) Vertreter:
**Patentanwälte
Dr. Solf & Zapf
Candidplatz 15
81543 München (DE)**

### (54) Kollerverdichtervorrichtung

(57) Die Erfindung betrifft eine Kollerverdichtervorrichtung zur Herstellung von Pellets aus Schüttgut, insbesondere weichem Schüttgut wie z.B. Abfall, Kunststoff oder Hausmüll, mit einer Ringmatrize (1), in welcher radial ausgerichtete Preßkanäle (2) ausgebildet sind, und die in Drehrichtung (12) von einer Antriebseinheit antreibbar ausgebildet ist, wobei die Ringmatrize (1) und zwei Seitenwandungen (14, 15) einen Verdichtungsraum (5) begrenzen, und eine der Seitenwandungen (14) eine Einfüllöffnung (16) zum Einbringen des zu pelletierenden Materials aufweist, und in dem Verdichtungsraum (5) ein Arbeitskollerrad (6) zum Verdichten und Pressen des zu pelletierenden Materials in die Preßkanäle (2) in Drehrichtung (12) der Einfüllöffnung (16) nachgeordnet angeordnet ist, so daß durch die Einfüllöffnung (16) eingebrachtes, zu pelletierendes Material unmittelbar dem Arbeitskollerrad (6) zugeführt, verdichtet und in die Preßkanäle (2) verpreßt wird, wobei das Arbeitskollerrad (6) einen Außendurchmesser (2r) aufweist, der zumindest dem Innenradius (R) der Matrize (1) entspricht.

Fig. 1

Printed by Xerox (UK) Business Services
2.16.3/3.4

**Beschreibung**

Die Erfindung betrifft eine Kollerverdichtervorrichtung zur Herstellung von Pellets aus Schüttgut nach dem Oberbegriff des Anspruchs 1.

Kollerverdichtervorrichtungen zur Herstellung von Pellets aus Schüttgut sind bekannt. Derartige Kollerverdichtervorrichtungen weisen eine Ringmatrize auf, in welche radial ausgerichtete Preßkanäle ausgebildet sind. Die Ringmatrize begrenzt in ihrem Innenbereich einen Verdichtungsraum. Diese Ringmatrizen sind horizontal oder vertikal angeordnet, wobei der Verdichtungsraum durch entsprechende Seitenwandelemente abgeschlossen ist. Im Verdichungsraum befinden sich zwei oder drei Kollerräder, wobei die Ringmatrize oder die Kollerräder angetrieben werden, so daß Schüttgut, das in den Verdichtungsraum eingebracht wird, verdichtet und durch die Preßkanäle gepreßt wird.

Mit solchen Kollerverdichtervorrichtungen werden unterschiedlichste Materialien, wie z.B. Plastik, Papier, Holz, Müll, Kohle oder organische Stoffe, pastöse, staub- oder pulverförmige Abfälle aller Art zu hoch verdichteten Pellets verarbeitet.

Beim Durchdringen der Preßkanäle wird das Schüttmaterial zu Preßlingen verdichtet. Durch die Reibung zwischen der Innenfläche der Preßkanäle und der Oberfläche der Preßlinge und der dabei entstehenden Reibungswärme werden die Preßlinge an ihrer Oberfläche hoch verdichtet, so daß sie nach dem Verdichtungsvorgang eine glatte, die Pellets umschließende und zusammenhaltende Oberfläche aufweisen.

Die bekannten Kollerverdichtervorrichtungen haben sich bei der Herstellung von zu Pellets gepreßtem Futtermittel bewährt. Zur Herstellung von Futtermittel sind unterschiedliche Arten von Kollerverdichtervorrichtungen bekannt, die in der Regel mehrere kleine Koller aufweisen, die das Futtermittel durch die Matrize pressen. Die Firma Ulrich Walter Maschinenbau GmbH, Mettmann, wirbt mit Kollerverdichtervorrichtungen für das Pelletieren von Mischfutter, die unter anderem zwei Koller unterschiedlicher Größe aufweisen. Der kleinere Koller dient zum Druckaufbau in den Preßkanälen und mit dem großen Koller wird das vom kleinen Koller nicht verdichtete Mischfutter in die Preßkanäle nachgepreßt.

Werden derartige zur Pelletierung von Futtermittel vorgesehene Kollerverdichtervorrichtungen mit zwei oder mehreren Kollerrädern zum Pelletieren von weichen Materialien, wie z.B. Kunststoff oder kunststoffhaltige Abfälle, verwendet, erwärmt sich das zu pelletierende Material durch die Verwirbelung, Reibung und Komprimierung zwischen den Kollerrädern, so daß die Kunststoffanteile aufschmelzen und die Materialverteilung unter der Kolben-Preßfläche abnimmt und das Material verklumpt und sogar eine schmierige Konsistenz annehmen kann.

Eine solche Verklumpung oder Verschmierung ist insbesondere in der Anfahrphase der Kollerverdichtervorrichtung problematisch, da die Preßkanäle mit abgekühltem Material verstopft sind und das zwischen dem Kollerrad und der Matrize komprimierte Abfallmaterial wegen seiner zunehmend schmierigen Konsistenz entlang der Innenfläche der Matrize abschmiert und nicht durch die Preßkanäle gedrückt werden kann. Vor dem Kollerrad sammelt sich das erwärmte und verdichtete Material zu einem Anfahrkuchen an, dessen Konsistenz immer schmieriger wird, so daß die Materialverpressung zwischen Matrize und den Kollerrädern vermindert wird und die Kollerräder ohne sich zu drehen an der Matrize entlanggleiten. Ein normaler Betrieb der Kollerverdichtervorrichtung ist dann nicht mehr möglich.

Bei der Pelletierung von Abfallmaterial wird, um die Gefahr eines derartigen Abschmierens zu verhindern, das in die Kollerverdichtervorrichtung einzubringende Abfallmaterial auf eine Restfeuchte von 5 bis 6 % getrocknet, da der Wasseranteil als Gleitmittel im Abfallmaterial wirkt und ein hoher Wasseranteil die Gefahr erhöht, daß das Abfallmaterial zwischen der Matrize und den Kollerrädern abschmiert. Die Verringerung der Restfeuchte vermindert lediglich die Gefahr des Abschmierens, aber kann sie nicht vollständig beseitigen.

Deshalb können relativ weiche Materialien, wie z.B. Hausmüll, Kunststoff oder allgemeiner Abfall, nur mit geringem Masse-Durchsatz mit bekannten Kollerverdichtervorrichtungen pelletiert werden. Denn je höher die Pelletierleistung sein soll, desto größer muß die Drehgeschwindigkeit der Matrize bzw. der Kollerräder sein, wodurch die Verwirbelung des zu pelletierenden Materials stark zunimmt und das zu pelletierende Material entsprechend stark erwärmt wird und verklumpen kann. Je nach Art und Zusammensetzung des zu pelletierenden Materials können die Klumpen eine weiche, schmierige Konsistenz besitzen, die zu einem Abschmieren der Kollerräder führt oder eine hohe Festigkeit aufweisen, die zur Blockade der Kollerverdichtervorrichtung führen kann. Die in die Kollerverdichtervorrichtung zugeführte Materialmenge muß deshalb beim Zuführen von weichen, mit schmelzbaren Anteilen versehenen Materialien so gering gehalten werden, daß eine solche Verklumpung nicht auftreten kann.

Der Erfindung liegt deshalb die Aufgabe zugrunde, eine Kollerverdichtervorrichtung zu schaffen, mit welcher weiche Materialien, wie z.B. Abfall, Kunststoff oder Hausmüll, ohne der Gefahr eines Abschmierens oder Blockierens der Kollerverdichtervorrichtung mit hohem Durchsatz pelletiert werden können.

Die Aufgabe wird durch eine Pelletiervorrichtung mit dem Merkmal des Anspruchs 1 gelöst. Vorteilhafte Ausgestaltungen sind in den Unteransprüchen gekennzeichnet.

Die Erfindung wird nachfolgend anhand der Zeichnung beispielhaft näher erläutert. Es zeigen schematisch:

Fig. 1          im Querschnitt eine asynchrone Kollerverdichtervorrichtung nach der Erfindung;

Fig. 2a, 2b    jeweils einen Materialbeschickungskanal für die in Fig. 1 gezeigte Kollerverdichtervorrichtung      im
               Querschnitt;

Fig. 3         im Querschnitt eine exzentrische
               Kollerverdichtervorrichtung nach der
               Erfindung;

Fig. 4a, 4b, 4c  jeweils einen Materialbeschickungskanal für die in Fig. 3 gezeigte Kollerverdichtervorrichtung      im
               Querschnitt;

Fig. 5         schematisch    vereinfacht    eine
               Matrize, in der zur Veranschaulichung der Verdichtungslänge und
               des Andruckwinkels zwei unter-
               schiedlich große Kollerräder ange-
               ordnet sind.

Die erfindungsgemäße Kollerverdichtervorrichtung zur Herstellung von Pellets und Schüttgut weist eine Ringmatrize 1 auf, in welcher radial ausgerichtete Preßkanäle 2 ausgebildet sind, die sich von einer Innenfläche 3 der Matrize 1 zu einer Außenfläche 4 erstrecken. Die Matrize 1 begrenzt in ihrem Innenbereich einen Verdichtungsraum 5. Im Verdichtungsraum 5 sind ein größeres Arbeitskollerrad 6 und ein kleineres Stützkollerrad 7 angeordnet. Die Kollerräder 6, 7 weisen jeweils eine Mantelfläche 8, 9 auf, mit welcher sie auf der Innenfläche 3 der Matrize 1 abrollen.

Die Kollerräder 6, 7 sind jeweils um eine horizontale, ihren Mittelpunkt durchsetzende Rotationsachse 10, 11 gelagert. Die Achsen 10, 11 sind in der Kollerverdichtervorrichtung ortsfest auf einer Durchmesserlinie D der Ringmatrize 1 angeordnet, wobei die Achsen 10, 11 der Kollerräder 6, 7 bzw. deren Mittelpunkte von der Innenfläche 3 der Matrize 1 um jeweils ihren Radius beabstandet angeordnet sind, so daß die Kollerräder 6, 7 mit ihren Mantelflächen 8, 9 mit der Innenfläche 3 der Matrize 1 in Kontakt stehen. Die Matrize 1 wird von einer an sich bekannten Antriebseinheit (nicht dargestellt) in Richtung des Pfeiles 12 angetrieben, so daß sie um eine horizontale, ihren Mittelpunkt durchsetzende Achse 13 gedreht wird. Die Kollerräder 6, 7 werden durch einen Reibschluß zwischen ihre jeweiligen Mantelflächen 8, 9 und der Innenfläche der Matrize 1 von der Matrize 1 in Drehbewegung um ihre Achsen 10, 11 versetzt. Es liegt auch im Rahmen der Erfindung, die Kollerräder 6,7 mittels einer Antriebseinheit anzutreiben, wobei die Matrize 1 durch den Reibschluß mit den Kollerrädern (6, 7) angetrieben wird.

Die Kollerräder 6, 7 sind mit ihrem untersten Randbereich auf gleicher Höhe entlang einer Horizontallinie $L_H$ angeordnet. Die Durchmesserlinie D, auf der die Achsen 10, 11 der Kollerräder 6, 7 angeordnet sind, schließt somit mit einer horizontalen Durchmesserlinie $D_H$ einen Winkel $\alpha$ ein, der je nach den Größenverhältnissen der Kollerräder 6, 7 zwischen 10° bis 30° liegt.

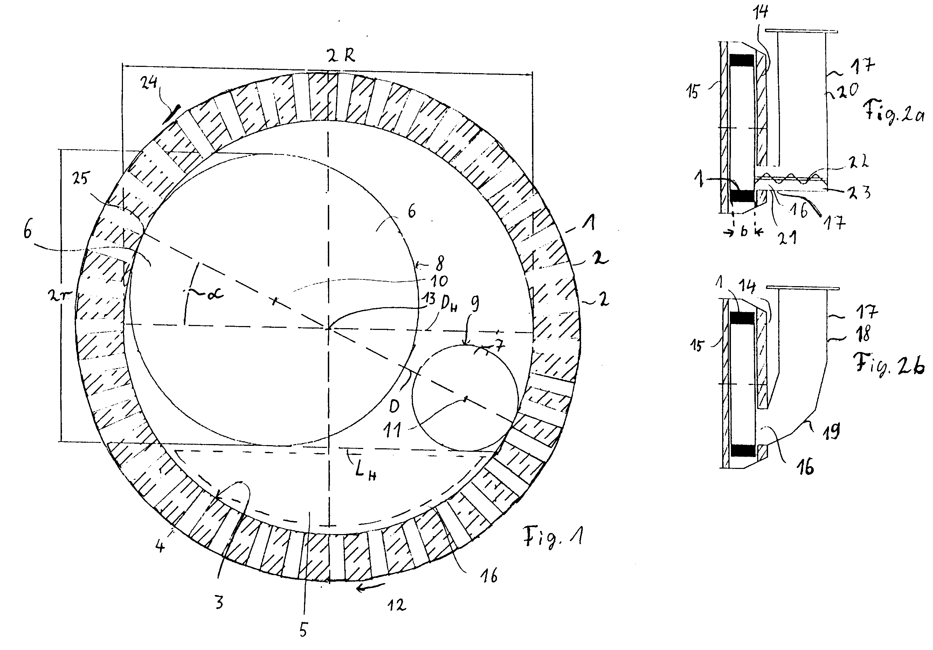

Der innerhalb der Matrize 1 ausgebildete Verdichtungsraum 5 ist in Axialrichtung durch eine vordere bzw. hintere Seitenwandung 14, 15 begrenzt, die in Axialrichtung vor und hinter der Matrize 1 angeordnet sind und die gesamte Matrize 1 abdecken (Fig. 2a, 2b). In der vorderen Seitenwandung 14 ist eine Einfüllöffnung 16 eingebracht, an welche außenseitig ein Materialbeschickungskanal 17 angesetzt ist.

Der Materialbeschickungskanal 17 kann in an sich bekannter Weise aus einem vertikalen Zufuhrrohr 18 ausgebildet sein, das an seinem unteren Ende einen gekrümmten Endbereich 19 aufweist, der unmittelbar an die Einfüllöffnung 16 angesetzt ist (Fig. 2b). Das zu pelletierende Schüttgut wird in den Materialbeschik-kungskanal 17 geschüttet und durch den gekrümmten Endbereich 19 in den Verdichtungsraum 5 abgelenkt.

In einer bevorzugten Ausführungsform der Koller-verdichtervorrichtung ist der Materialbeschickungska-nal 17 aus einem vertikalen Zufuhrrohr 20 und einem an seinem unteren Ende angeordneten horizontalen Schneckenrohr 21 ausgebildet, das in die Einfüllöffnung 16 mündet. Im Schneckenrohr 21 lagert drehbar eine Schnecke 22, die sich bis zum Rand der Matrize 1 erstreckt. Die Schnecke 22 weist vorzugsweise ein progressives Schneckengewinde 23 auf, so daß das zu pelletierende Material beim Fördern in den Verdichtungsraum 5 komprimiert wird, wodurch es beim Eintritt in den Verdichtungsraum 5 expandiert und in die Tiefe des Verdichtungsraumes 5 gefördert wird. Das Vorsehen der Schnecke 22 erlaubt es, den Verdichtungsraum 5 mit einer größeren Tiefe bzw. die Matrize 1 mit einer größeren Breite b (Fig. 2a) zu gestalten, wodurch die Anzahl der Preßkanäle 2 erhöht und die Kapazität der gesamten Kollerverdichtervorrichtung gesteigert werden kann.

Die maximale Einfüllöffnung 16 ist in der Draufsicht der Kollerverdichtervorrichtung (Fig. 1) in dem Bereich zwischen der den unteren Rand der Kollerräder 6, 7 begrenzenden Linie $L_H$ und dem unterhalb von der Linie $L_H$ angeordneten Bereich der Innenfläche 3 der Matrize 1 begrenzt.

Für die Erfindung ist wesentlich, daß das große Arbeitskollerrad 6 in Drehrichtung 12 der Einfüllöffnung 16 nachgeordnet ist, so daß das in den Verdichtungsraum 5 über den Materialbeschickungskanal 17 zugeführte Material unmittelbar von dem Kollerrad 6 verdichtet und durch die Preßkanäle 2 gepreßt wird. Die aus den Preßkanälen 2 austretenden Preßlinge werden mittels eines Schneidmessers 24 zu den Pellets geschnitten, wobei das Schneidmesser in Drehrichtung 12 dem Arbeitskollerrad 6 nachgeordnet an der Außenfläche 4 der Matrize 1 angeordnet ist. Die Schneideeinrichtung kann winklig und in der Höhe verstellt werden, so daß sie auch als Abschlageinrichtung dienen kann.

Eine direkte Kühleinrichtung an der Schneideinrichtung verhindert das Ziehen von Fäden beim Schneidvorgang.

Eine Absaugeinrichtung sorgt für eine sofortige Oberflächenkühlung der Pellets, die ein Zusammenkleben der noch heißen und weichen Pellets verhindert, durch einen Luftstrom. Die Absaugeinrichtung weist Absaugrohre auf, in deren Bögen Reibschikanen eingebaut sein können. Die rauhe Innenwand bewirkt eine Kalibrierung des Pellets an Oberfläche und Kanten und eliminiert Fäden, die beim Abschlag an den Pelletenden anhaften können.

Durch den Luftstrom der Absaugeinrichtung werden die Pellets an ihrer Oberfläche gekühlt, so daß die Fäden gekühlt werden und erstarren und an den Reibschikanen bzw. der rauhen Innenwand des Absaugrohres von den Pellets abgeschlagen werden und die gewünschte Stückigkeit und Schüttfähigkeit der Pellets sichergestellt wird.

Der Durchmesser der Pellets liegt üblicherweise im Bereich von 4 bis 12 mm, wobei die Pelletlänge etwa das 1,5-fache des Pelletsdurchmessers betragen sollte. Ein Pellet mit einem Durchmesser von 6 mm weist demnach eine Länge von etwa 8 bis 9 mm auf.

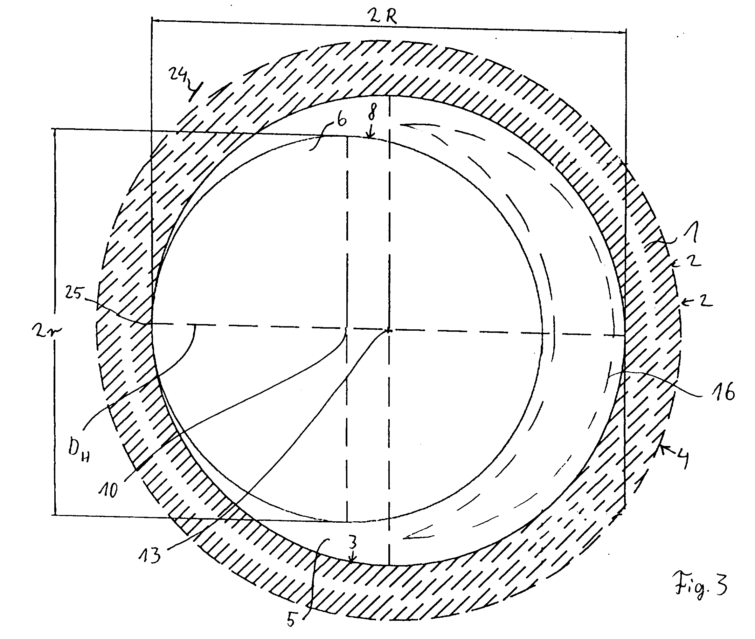

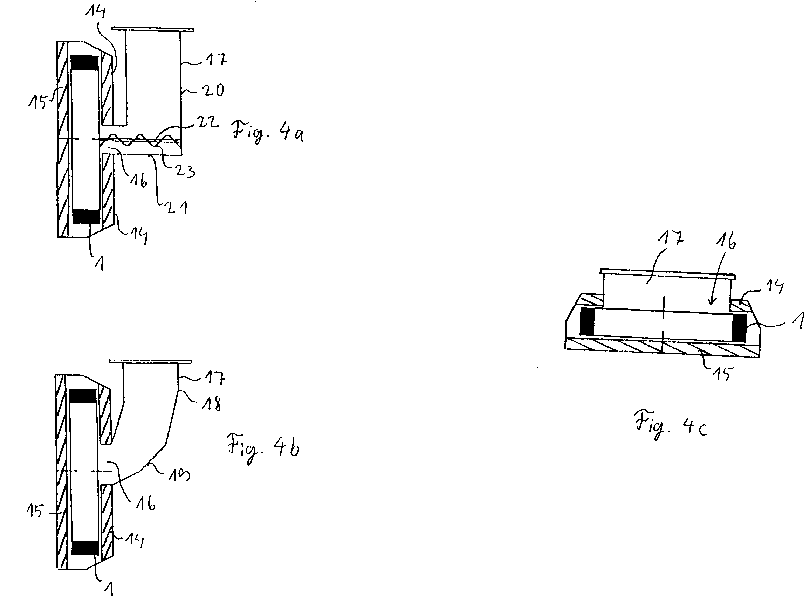

In den Fig. 3, 4a bis 4c ist ein zweites Ausführungsbeispiel einer erfindungsgemäßen Kollerverdichtervorrichtung mit einem exzentrisch gelagerten Arbeitskollerrad 6 dargestellt. Im wesentlichen Aufbau entspricht das zweite Ausführungsbeispiel dem ersten Ausführungsbeispiel; demgemäß sind gleiche Teile mit gleichen Bezugzeichen versehen.

Das zweite Ausführungsbeispiel weist wiederum eine Ringmatrize 1 auf, die einen Verdichtungsraum 5 begrenzt, in dem ein Arbeitskollerrad 6 exzentrisch bezüglich der Rotationsachse 13 der Matrize 1 gelagert ist, so daß das Arbeitskollerrad 6 mit seiner Umfangsfläche 8 an der Innenfläche 3 der Matrize 1 anliegt. Ein Stützkoller ist hier nicht vorgesehen, so daß die fehlende Abstützung des Arbeitskollers durch eine verstärkte Lagerung des Arbeitskollers 6 aufgenommen wird.

Der Außendurchmesser (= 2r) des Arbeitskollerrades 6 entspricht zumindest dem Innenradius (R) der Matrize 1. Vorzugsweise liegt der Radius r des Arbeitskollerrades 6 im Bereich von 0,5 R bis 0,9 R, und insbesondere im Bereich von 0,6 R bis 0,8 R.

Bei einer vertikalen Anordnung der Kollerverdichtervorrichtung erfolgt die Zuführung des zu pelletierenden Materials mittels eines Materialbeschickungskanals 17, der ähnlich wie beim ersten Ausführungsbeispiel aus einem vertikalen Zufuhrrohr 18 ausgebildet ist, das an seinem unteren Ende einen gekrümmten Endbereich 19 aufweist, der unmittelbar an die Einfüllöffnung 16 angesetzt ist (Fig. 4b) oder aus einem vertikalen Zufuhrrohr 20 besteht, an dessen unterem Ende ein horizontales Schneckenrohr 21 ausgebildet ist, das in die Einfüllöffnung 16 mündet. Die im Schneckenrohr 21 lagernde Schnecke 22 ist wiederum vorzugsweise mit einem progressiven Schneckengewinde 23 versehen, so daß das zu pelletierende Material beim Fördern in den Verdichtungsraum 5 komprimiert und beim Eintritt in den Verdichtungsraum 5 expandiert und in die Tiefe des Verdichtungsraumes 5 gefördert wird. Bei dieser vertikal angeordneten Kollerverdichtervorrichtung befindet sich die Einfüllöffnung 16 etwa auf halber Höhe der Matrize 1 im Bereich zwischen der Mantelfläche 8 des Kollerrades 6 und der Innenfläche 3 der Matrize 1 (Fig. 4a, 4b).

Eine bevorzugte Ausführungsform der Kollerverdichtervorrichtung mit exzentrisch gelagertem Arbeitskollerrad 6 ist horizontal angeordnet (Fig. 4c). Die in die vordere Seitenwandung 14 eingebrachte Einfüllöffnung 16 ist mondsichelförmig ausgebildet und in dem Zwischenbereich zwischen der Umfangsfläche 8 des Arbeitskollerrades 6 und der Innenfläche 3 der Matrize 1 angeordnet (Fig. 1), so daß der überwiegende Flächenbereich davon als Einfüllöffnung 16 genutzt werden kann. Diese große Einfüllöffnung ermöglicht einen extrem hohen Volumendurchsatz an zu pelletierendem Material, so daß auch bei relativ leichtem Material der gewünschte Massedurchsatz erzielt wird. Der Materialbeschickungskanal 17 ist an die Form der Einfüllöffnung 16 angepaßt und das zu pelletierende Material fällt durch die große Einfüllöffnung 16 ohne zusätzliche technische Hilfsmittel in den Verdichtungsraum 5.

Beim Verdichten des zu pelletierenden Materials wird das Material zwischen der Innenfläche 3 der Matrize 1 und der Mantelfläche 8 des Arbeitskollerrades 6 verdichtet.

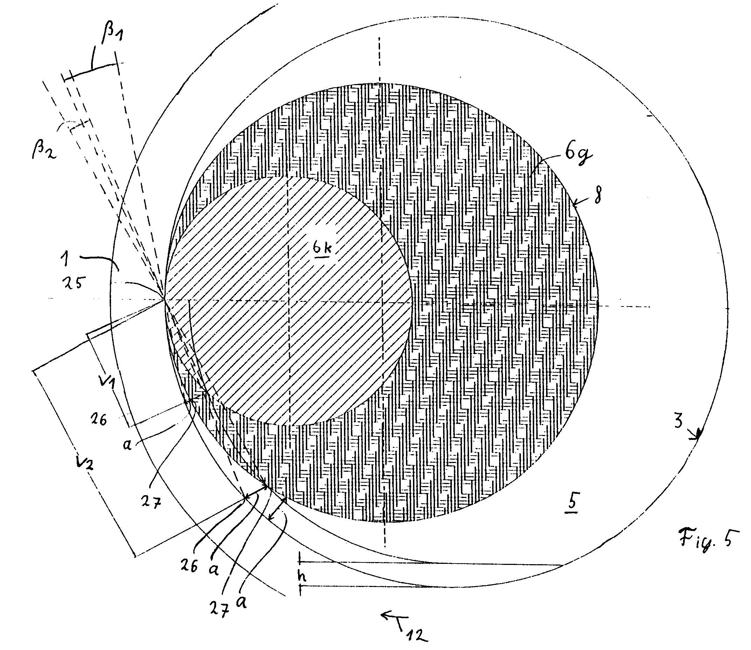

Geht man davon aus, daß das zu pelletierende Material mit konstanter Schütthöhe h (Fig. 5) dem Verdichtungsraum 5 zugeführt und von der Matrize 1 in Drehrichtung 12 zum Arbeitskollerrad 6 befördert wird, so wird das Material verdichtet, sobald der Abstand h zwischen der Matrize 1 und dem Kollerrad 6 kleiner als die Schütthöhe h ist.

Als Verdichtungslänge wird der Weg zwischen dem Anfangspunkt der Verdichtung des Materials ( a = h ) und dem Berührungspunkt 25 zwischen dem Kollerrad 6 und der Matrize 1 bezeichnet, an dem die Verdichtung beendet ist.

In Fig. 5 sind ein kleines und ein großes Kollerrad 6k, 6g eingezeichnet. Man erkennt, daß die Verdichtungslänge V2 des größeren Kollerrades 6g wesentlich größer als die Verdichtungslänge V1 des kleineren Kollerrades 6k ist.

Ferner ist ein Andruckwinkel β als derjenige Winkel zwischen zwei Geraden definiert, die sich beide durch den Berührungspunkt 25 zwischen dem Kollerrad 6 und der Matrize 1 und jeweils einem der Schnittpunkte 26, 27 zwischen der Innenfläche 3 der Matrize 1 bzw. der Mantelfläche 8 und einer Abstandslinie a am Anfangspunkt der Verdichtung erstrecken.

Der Andruckwinkel β1 des kleineren Arbeitskollerrades 6k ist größer als der Andruckwinkel β2 des größeren Arbeitskollerrades 6g.

Es kann somit festgehalten werden, daß je kleiner ein Kollerrad ist, desto größer ist dessen Andruckwinkel und desto kürzer ist dessen Verdichtungslänge. Ein kleiner Andruckwinkel bedeutet, daß der Abstand zwischen der Mantelfläche 8 des Kollerrades und der Innenfläche 3 der Matrize langsam über die relativ lange Verdichtungslänge abnimmt, wodurch die Kompressionskräfte, die auf das zwischen dem Arbeitskollerrad und der Matrize eingebrachte Material über die gesamte Verdichtungslänge sehr gleichmäßig wirken. Hierdurch werden in allen Preßkanälen 2 exakt identische Drücke erzielt. Zudem weitet sich der Spalt zwischen der Matrize 1 und dem Kollerrad 6 mit dem kleinen Andruckwinkel β auf, so daß ein Auspreßdruck, durch den das Material aus dem Spalt zwischen der Matrize 1 und dem Kollerrad 6 entgegen zur Drehrichtung 12 ausgepreßt wird, entsprechend gering ist und das Material vollständig in die Preßkanäle 2 eingepreßt wird, selbst wenn weiches Material verdichtet wird.

Ist der Andruckwinkel β hingegen groß, wird das Material an dem Bereich innerhalb der Verdichtungslänge entsprechend schneller zusammengedrückt und der Spalt zwischen der Matrize und dem Kollerrad öffnet sich relativ stark entgegen zur Drehrichtung 12, wodurch das Material eher herausgedrückt wird. Dies ist insbesondere beim Anfahren der Kollerverdichtervorrichtung nachteilig, da die Preßkanäle 2 erst freigepreßt werden müssen und sich ein sehr hoher Kompressionsdruck zwischen dem Kollerrad und der Matrize aufbaut, wodurch das Material entgegen zur Drehrichtung aus dem Bereich der Verdichtungslänge herausgepreßt werden und sich ein Anfahrkuchen ansammeln kann. Im Anfahrkuchen wird das Material umgewälzt und verdichtet, so daß es zunehmend erwärmt wird und schmelzbare Anteile aufschmelzen, wobei sich eine schmierige Schicht zwischen dem Kollerrad und der Matrize bildet und der Reibschluß zwischen der Matrize 1 und dem Kollerrad 6 aufgehoben wird.

Die Erfindung hingegen sieht vor, daß der Außendurchmesser (= 2r) des Kollerrades 6 zumindest dem Innenradius (R) des Matrize 1 entspricht. Vorzugsweise liegt der Radius r des Kollerrades 6 im Bereich von 0,5 R bis 0,8 R, und insbesondere im Bereich von 0,6 R bis 0,7 R.

Hierdurch wird ein kleiner Andruckwinkel und eine große Verdichtungslänge erzielt, so daß selbst weiche Materialien, die zum Ausschmieren neigen, sicher verdichtet und unter exakt festlegbarem Druck durch die Preßkanäle 2 verpreßt werden. Durch den langen Verdichtungsweg wird auch sichergestellt, daß das zugeführte Material fast vollständig durch das eine einzige Arbeitskollerrad 6 verdichtet und in die Preßkanäle 2 verpreßt wird, wobei nur ein zu vernachlässigender Anteil an Feinfraktur durch die Kontaktstelle 25 zwischen dem Arbeitskollerrad 6 und der Matrize 1 hindurchtritt.

Da das zugeführte Material fast vollständig während des ersten Verdichtungsvorganges am Arbeitskoller 6 verpreßt wird und der Anteil an Feinfraktur sehr gering ist, befindet sich im Verdichtungsraum 5 außerhalb des Bereiches zwischen der Einfüllöffnung 16 und dem Kontaktpunkt 25 zwischen dem Arbeitskollerrad 6 und der Matrize 1 wenig Material, so daß keine nennenswerten Materialverwirbelungen auftreten, die bei bekannten Kollerverdichtervorrichtungen eine beträchtliche Wärmeverteilung und Erwärmung des zu verdichtenden Materials verursachen.

Das kleinere Stützkollerrad 7 dient deshalb im wesentlichen nur zum Erzeugen eines Kräfteausgleiches an der Matrize 1 gegenüber der Belastung durch den Arbeitskoller 6. Zudem wird durch den Stützkoller 7 das aus den Preßkanälen 2 expandierende Material nachverpreßt. Eine Verdichtung von noch nicht in die Preßkanäle 2 eingepreßtem Material findet an dem kleinen Stützkollerrad 2 nicht statt, so daß die Problematik des Abschmierens hier nicht vorliegt.

Durch das Vorsehen eines im Vergleich zu bekannten Kollerverdichtervorrichtungen relativ großen Arbeitskollerrades 6 wird eine Verdichtung mit definierten Wärmeverhältnissen erzielt, da das an der Einfüllöffnung 16 zugeführte kühle Material ohne Verwirbelung direkt dem Arbeitskolben 6 zugeführt und vollständig verdichtet und in die Preßkanäle 2 verpreßt wird. Das zu pelletierende Material wird deshalb vor dem Verdichten und Einpressen weder verwirbelt noch erwärmt, so daß selbst bei einem hohen Kunststoffanteil keine Gefahr des Aufschmelzens des Kunststoffes und des Abschmierens der Kollerverdichtervorrichtung besteht. Die Verweilzeit des zu pelletierenden Materials im Verdichtungsraum 5 ist deshalb sehr kurz und die kontinuierliche Zufuhr von kühlem, neuem Material bewirkt zudem eine permanente Kühlung des Verdichtungsraumes 5. Mit der erfindungsgemäßen Kollerverdichtervorrichtung ist es deshalb möglich, im Verdichtungsraum 5 die Temperatur unter 60°C zu halten, wohingegen in den Preßkanälen 2 aufgrund der Friktionswärme Temperaturen von über 80°C erzielt werden.

Es hat sich überraschenderweise gezeigt, daß beim Pelletieren von Abfallmaterial mit der erfindungsgemäßen Vorrichtung dieses weniger getrocknet werden muß, sondern ein relativ hoher Feuchtigkeitsgehalt toleriert werden kann, der sogar einen Kühleffekt durch das Abdampfen des Wasseranteils bewirkt, wenn das zu pelletierende Material an der sich auf Arbeitstemperatur erwärmten Matrize 1 anliegt, so daß selbst bei sehr hohen Materialdurchsätzen durch die entprechend hohe Zufuhr von kühlem zu pelletierenden Material eine unerwünschte Erwärmung im Verdichtungsraum 5 verhindert wird und der Kondensation keine Bindung des Staubs und Feinmaterials ermöglicht, was an den Kollerzwischenräumen anhaften kann und ebenfalls zur Blockade führen könnte.

Da die Einfüllöffnung 16 im Vergleich zu bekannten Kollerverdichtervorrichtungen sehr groß ausgebildet sein kann und bei der asynchronen Kollerverdichtervorrichtung lediglich durch die Linie $L_H$ und die Matrize 1 begrenzt ist, können große Mengen eines leichten und lockeren Materials, wie z.B. Abfall oder dergleichen, zugeführt werden, so daß die gewünschten Massedurchsätze erzielt werden.

Da das zu pelletierende Material im Verdichtungsraum 5 kaum erwärmt wird, wird es im wesentlichen nur durch die Friktionswärme beim Durchdringen der Preßkanäle 2 erwärmt. Diese Friktionswärme ist exakt durch die Länge der Preßkanäle festlegbar. Die erfindungsgemäße Kollerverdichtervorrichtung kann deshalb gegenüber herkömmlichen Kollerverdichtervorrichtungen eine Matrize mit größerer Wandstärke und dementsprechend längeren Preßkanälen aufweisen. Der Verdichtungs- und Temperaturzustand der Preßlinge in den Preßkanälen kann exakt durch die Länge der Preßkanäle festgelegt werden, da die auftretende Friktionswärme für die jeweiligen zu pelletierenden Materialien gut bekannt sind. Somit kann die Konsistenz der Preßlinge mit der erfindungsgemäßen Kollerverdichtervorrichtung exakt eingestellt werden, weshalb beim Schneiden der Pellets am Schneidmesser 24 bekannte Schnittprobleme, wie sie z.B. durch Fadenziehen des aufgeschmolzenen Kunststoffmaterials auftreten, verringert werden, und zugleich eine gewünschte Festigkeit der Pellets gewährleistet wird.

Mit der erfindungsgemäßen Kollerverdichtervorrichtung werden sehr hohe Masse-Durchsätze erzielt, da das zugeführte Material sofort verpreßt wird. Bei herkömmlichen Kollerverdichtungsvorrichtungen wird zur Erhöhugn der Durchsätze die Anzahl der Arbeitskollerräder erhöht; bei der vorliegenden Erfindung wird hingegen nur ein einziges Arbeitskollerrad vorgesehen.

## Patentansprüche

1. Kollerverdichtervorrichtung zur Herstellung von Pellets aus Schüttgut, insbesondere weichem Schüttgut wie z.B. Abfall, Kunststoff oder Hausmüll, mit einer Ringmatrize (1), in welcher radial ausgerichtete Preßkanäle (2) ausgebildet sind, und die in Drehrichtung (12) von einer Antriebseinheit antreibbar ausgebildet ist, wobei die Ringmatrize (1) und zwei Seitenwandungen (14, 15) einen Verdichtungsraum (5) begrenzen, und eine der Seitenwandungen (14) eine Einfüllöffnung (16) zum Einbringen des zu pelletierenden Materials aufweist, und
in dem Verdichtungsraum (5) ein Arbeitskollerrad (6) zum Verdichten und Fressen des zu pelletierenden Materials in die Preßkanäle (2) in Drehrichtung (12) der Einfüllöffnung (16) nachgeordnet angeordnet ist, so daß durch die Einfüllöffnung (16) eingebrachtes, zu pelletierendes Material unmittelbar dem Arbeitskollerrad (6) zugeführt, verdichtet und in die Preßkanäle (2) verpreßt wird,
**dadurch gekennzeichnet,**
daß das Arbeitskollerrad (6) einen Außendurchmesser (2r) aufweist, der zumindest dem Innenradius (R) der Matrize (1) entspricht.

2. Kollerverdichtervorrichtung nach Anspruch 1,
**dadurch gekennzeichnet,**
daß der Radius (r) des Arbeitskollerrades (6) im Bereich des 0,5-fachen bis 0,9-fachen Radius (R) der Matrize liegt.

3. Kollerverdichtervorrichtung nach Anspruch 1 und/oder 2,
**dadurch gekennzeichnet,**
daß der Radius (r) des Arbeitskollerrades (6) zumindest dem 0,6-fachen des Radius (R) der Matrize (1) entspricht.

4. Kollerverdichtervorrichtung nach einem oder mehreren der Ansprüche 1 bis 3,
**dadurch gekennzeichnet,**
daß der Radius (r) des Arbeitskollerrades (6) zumindest dem 0,7-fachen des Radius (R) der Matrize (1) entspricht.

5. Kollerverdichtervorrichtung nach einem oder mehreren der Ansprüche 1 bis 4,
**dadurch gekennzeichnet,**
daß ein einziges Arbeitskollerrad (6) im Verdichtungsraum (5) angeordnet ist.

6. Kollerverdichtervorrichtung nach einem oder mehreren der Ansprüche 1 bis 5,
**dadurch gekennzeichnet,**
daß im Verdichtungsraum (5) ein Stützkollerrad (7) vorgesehen ist, das einen kleineren Durchmesser als das Arbeitskollerrad (6) aufweist.

7. Kollerverdichtervorrichtung nach Anspruch 6,
**dadurch gekennzeichnet,**
daß die beiden Kollerräder (6, 7) jeweils ihren Mittelpunkt durchsetzende Rotationsachsen (10, 11) aufweisen, die auf einer Durchmesserlinie (D) der Ringmatrize (1) angeordnet sind, wobei die Achsen (10, 11) der Kollerräder (6, 7) um jeweils ihren Radius von der Innenfläche (3) der Matrize (1) beabstandet sind, so daß die Kollerräder (6, 7) mit ihren Mantelflächen (8, 9) und mit der Innenfläche (3) der Matrize einen Reibschluß bildend in Kontakt stehen.

8. Kollerverdichtervorrichtung nach Anspruch 7,
**dadurch gekennzeichnet,**
daß die Kollerräder (6, 7) mit ihrem untersten Randbereich auf gleicher Höhe entlang einer Horizontallinie ($L_H$) angeordnet sind.

9. Kollerverdichtervorrichtung nach einem oder mehreren der Ansprüche 1 bis 8,
**dadurch gekennzeichnet,**

daß an die Einfüllöffnung (16) außenseitig ein Materialbeschickungskanal (17) angesetzt ist.

10. Kollerverdichtervorrichtung nach Anspruch 9,
   **dadurch gekennzeichnet,**
   daß der Materialbeschickungskanal (17) ein vertikales Zufuhrrohr (18) aufweist, das an seinem unteren Ende einen gekrümmten Endbereich (19) aufweist, der unmittelbar an die Einfüllöffnung (16) angesetzt ist.

11. Kollerverdichtervorrichtung nach Anspruch 9,
   **dadurch gekennzeichnet,**
   daß der Materialbeschickungskanal (17) aus einem vertiaklen Zufuhrrohr (20) und einem an seinem unteren Ende angeordneten horizontalen Schnekkenrohr (21) ausgebildet ist, das in die Einfüllöffnung (16) mündet, wobei im Schneckenrohr (21) drehbar eine Schnecke (22) zum Zuführen des zu pelletierenden Materials lagert, die sich bis zum Rand der Matrize (1) erstreckt.

12. Kollerverdichtervorrichtung nach Anspruch 11,
   **dadurch gekennzeichnet,**
   daß die Schnecke (22) ein progressives Schnekkengewinde (23) aufweist.

13. Kollerverdichtervorrichtung nach einem oder mehreren der Ansprüche 8 bis 12,
   **dadurch gekennzeichnet,**
   daß die Kollerverdichtervorrichtung vertikal angeordnet ist und die Einfüllöffnung (16) in dem durch die Horizontallinie ($L_H$) und dem darunter angeordneten Abschnitt der Innenfläche (3) der Matrize (1) begrenzten Bereich ist, angeordnet ist.

14. Kollerverdichtervorrichtung nach einem oder mehreren der Ansprüche 1 bis 5,
   **dadurch gekennzeichnet,**
   daß nur ein einziges Kollerrad (6) im Verdichtungsraum (5) angeordnet ist, das innerhalb der Matrize (1) exzentrisch gelagert ist.

15. Kollerverdichtervorrichtung nach Anspruch 14,
   **dadurch gekennzeichnet,**
   daß die Kollerverdichtervorrichtung horizontal angeordnet ist.

16. Kollerverdichtervorrichtung nach Anspruch 14 und/oder 15,
   **dadurch gekennzeichnet,**
   daß die Einfüllöffnung (16) mondsichelförmig ausgebildet und an dem Zwischenbereich zwischen der Umfangsfläche (8) des Arbeitskollerrades (6) und der Innenfläche (3) der Matrize (1) angeordnet ist.

17. Kollerverdichtervorrichtung nach einem oder mehreren der Ansprüche 1 bis 16,
   **dadurch gekennzeichnet,**
   daß ein Schneidmesser (24) an der Außenfläche (4) der Matrize (1) in Drehrichtung (12) dem Arbeitskollerrad (6) nachgeordnet angeordnet ist.

18. Kollerverdichtervorrichtung nach einem oder mehreren der Ansprüche 1 bis 16,
   **dadurch gekennzeichnet,**
   daß eine Abschlageinrichtung an der Außenfläche (4) der Matrize (1) in Drehrichtung (12) dem Arbeitskollerrad (6) nachgeordnet angeordnet ist, die eine Schneideinrichtung und eine Kühleinrichtung aufweist.

19. Kollerverdichtervorrichtung nach Anspruch 18,
   **dadurch gekennzeichnet,**
   daß die Absaugeinrichtung Absaugrohre aufweist, in das Reibschikanen eingebaut sind und/oder eine rauhe Innenwand aufweist.

Fig. 1

Fig. 2a

Fig. 2b

EP 0 867 273 A2

Fig. 3

Fig. 4c

Fig. 4a

Fig. 4b